# EUROPÄISCHE PATENTANMELDUNG

(11) **EP 2 456 039 A2**
(43) Veröffentlichungstag der Anmeldung: **23.05.2012**
(21) Anmeldenummer: 11187234.7
(22) Anmeldetag: 31.10.2011
(51) Int. Cl.: H02J 7/02, H05B 6/12

(54) **Haushaltsgerät und Verfahren zum Betreiben eines Haushaltsgeräts**

(30) Priorität: 12.11.2010 DE 102010043840
(71) Anmelder: BSH Bosch und Siemens Hausgeräte GmbH, 81739 München (DE)
(72) Erfinder: Jäger, Markus, 82008 Unterhaching (DE)

(57) **Zusammenfassung**

Es soll eine Lösung aufgezeigt werden, wie die Funktionalität eines Haushaltsgeräts (1, 14, 22) im Vergleich zum Stand der Technik erweitert werden kann. Es wird ein Haushaltsgerät (1, 14, 22) bereitgestellt, in welches ein Induktionsladegerät (9, 21, 26) integriert ist. Das Induktionsladegerät (9, 21, 26) beinhaltet eine Induktionsspule (10, 17, 27) und kann durch eine direkte Übertragung von Energie von der Induktionsspule (10, 17, 27) an ein elektronisches Gerät (13) einen internen elektrischen Energiespeicher dieses elektronischen Geräts (13) mit elektrischer Energie aufladen. Es wird auch ein Verfahren zum Betreiben eines Haushaltsgeräts (1, 14, 22) bereitgestellt.

## Beschreibung

Die Erfindung betrifft ein Haushaltsgerät, wie auch ein Verfahren zum Betreiben eines Haushaltsgeräts.

Haushaltsgeräte sind Geräte, die zur Haushaltsführung eingesetzt werden. Sie sind aus dem Stand der Technik in vielfältiger Ausgestaltung bekannt: Es wird zwischen Haushaltsgroßgeräten sowie Haushaltskleingeräten unterschieden. Zu den Haushaltsgroßgeräten zählen beispielsweise Waschmaschinen, Wäschetrockner, Geschirrspülmaschinen, Gargeräte, Dunstabzugshauben, Kältegeräte, Kühl-Gefrier-Kombinationen sowie Klimageräte. Zu den Haushaltskleingeräten zählen hingegen zum Beispiel ein Kaffeevollautomat sowie eine Küchenmaschine. Das Interesse gilt vorliegend vorzugsweise sowohl den Haushaltsgroßgeräten als auch den Haushaltskleingeräten, insbesondere jedoch einem Induktionskochfeld.

Ein Induktionskochfeld ist beispielsweise in der Druckschrift DE 10 2008 054 909 A1 beschrieben. Es beinhaltet bekanntlich eine Induktionsspule, die unterhalb einer Aufstellplatte zum Aufstellen eines Zubereitungsgefäßes - etwa einer Pfanne oder aber eines Topfes - angeordnet ist. Alternativ zum Zubereitungsgefäß kann auf das Kochfeld auch ein elektrisches Haushaltskleingerät gestellt und betrieben werden, nämlich beispielsweise eine Kaffeemaschine, ein Mixer, ein Ladegerät, eine Friteuse, ein Toaster oder aber ein Wasserkocher. Also kann auch ein Haushaltskleingerät eine Betriebsenergie von der Induktionsspule des Induktionskochfelds beziehen. Das Haushaltskleingerät wird dabei mit dieser Energie betrieben.

Es ist Aufgabe der vorliegenden Erfindung, einen Weg aufzuzeigen, wie die Funktionalität eines Haushaltsgeräts im Vergleich zum Stand der Technik erweitert werden kann.

Diese Aufgabe wird erfindungsgemäß durch ein Haushaltsgerät mit den Merkmalen gemäß Patentanspruch 1 gelöst, wie auch durch ein Verfahren, welches die Merkmale des Patentanspruchs 10 aufweist. Vorteilhafte Ausführungen der Erfindung sind Gegenstand der abhängigen Patentansprüche und der Beschreibung.

Erfindungsgemäß wird ein Haushaltsgerät bereitgestellt, in welches ein Induktionsladegerät zum Aufladen eines elektronischen Geräts - insbesondere eines elektronischen Kleingeräts, etwa eines Mobiltelefons - integriert ist. Das Induktionsladegerät weist eine Induktionsspule auf. Das Induktionsladegerät kann durch eine direkte Übertragung von Energie von der Induktionsspule an das in einer Umgebung des Haushaltsgeräts befindliche elektronische Gerät einen internen elektrischen Energiespeicher des elektronischen Geräts mit elektrischer Energie aufladen.

Also wird die Funktionalität des Haushaltsgeräts im Vergleich zum Stand der Technik durch ein integriertes Induktionsladegerät erweitert, mittels welchem Energiespeicher ― etwa Akkus - von elektronischen Geräten direkt bzw. unmittelbar mit elektrischer Energie aufgeladen werden können, nämlich auf induktivem Wege. Anders als im Gegenstand gemäß Druckschrift DE 10 2008 054 909 A1 dient somit das Induktionsladegerät des erfindungsgemäßen Haushaltsgeräts nicht oder nicht nur zum Betreiben von anderen Haushaltsgeräten, sondern speziell zum Durchführen von Ladevorgängen von elektronischen Geräten. Solche Ladevorgänge sind mit einer Induktionsspule, wie sie im Induktionskochfeld gemäß Druckschrift DE 10 2008 054 909 A1 eingesetzt wird, auch nicht ohne Weiteres möglich: Es gilt nämlich die Beziehung, dass je größer der Unterschied in den Abmessungen der Induktionsspule und einer Sekundärspule eines elektronischen Gerätes ist, desto weniger effizient die Energieübertragung ist und desto geringer der Wirkungsgrad und der Kopplungsfaktor zwischen der Induktionsspule und der Sekundärspule sind. Wird nun ein elektronisches Gerät - insbesondere ein elektronisches Kleinstgerät - auf das Kochfeld gemäß Druckschrift DE 10 2008 054 909 A1 gestellt, so findet aufgrund der relativ großen Abmessungen der dort eingesetzten Induktionsspule quasi keine Energieübertragung an das elektronische Kleingerät statt - der Kopplungsfaktor ist zu gering.

Das Induktionsladegerät des erfindungsgemäßen Haushaltsgeräts dient also speziell zum Durchführen von Ladevorgängen von elektronischen Geräten. Die Erfindung hat den Vorteil, dass eine Bedienperson ein elektronisches Gerät auf das Haushaltsgerät stellen kann, und der elektrische Energiespeicher dieses elektronischen Geräts wird aufgeladen. Die Bedienperson braucht somit kein zusätzliches Ladegerät für das elektronische Gerät; sie benötigt insbesondere auch keine zusätzliche Steckdose, um das elektronische Gerät aufzuladen.

Es kann in das Haushaltsgerät beispielsweise ein Induktionsladegerät integriert sein, wie es bereits aus dem Stand der Technik in vielfältiger Ausgestaltung bekannt ist. So sind beispielsweise Induktionsladegeräte für Mobiltelefone Stand der Technik. Es handelt sich hier um so genannte Induktionsmatten, auf welche Mobiltelefone gelegt und aufgeladen werden können. Die Funktionalität einer solchen Ladematte kann vorliegend in das Haushaltsgerät integriert werden.

Es erweist sich als besonders vorteilhaft, wenn das Induktionsladegerät zum Aufladen eines tragbaren Kommunikationsgeräts und/oder einer Digitalkamera als elektronischen Geräts ausgebildet ist. Beispielsweise kann das Induktionsladegerät zum Aufladen eines Mobiltelefons und/oder eines tragbaren Personalcomputers - etwa eines PDAs (personal digital assistant) und/oder eines Notebooks - dienen. Der Benutzer kommt dann ohne zusätzliche Ladegeräte für seine tragbaren Kommunikationsgeräte und/oder Kameras aus; es erübrigen sich lästige Ladeschnüre.

Das Induktionsladegerät kann auch ein standardisiertes Induktionsladegerät sein: Es ist beispielsweise nach dem Qi-Standard aufgebaut und somit zum Betrieb nach diesem Qi-Standard ausgebildet. Es handelt sich hier um einen Standard des "Wireless Power Consortiums" (WPC, siehe beispielsweise www.wirelesspowerconsortium.com, wie auch den Artikel "Nie wieder Steckdose" aus der Zeitschrift "WirtschaftsWoche" vom 12.7.2010, Nr. 28, S. 63). Auf diesem Wege gelingt es, eine einheitliche drahtlose Schnittstelle zum Aufladen unterschiedlichster elektronischer Geräte bereitzustellen, nämlich für Kameras, Mobiltelefone, Fembedienungen, Personalcomputer und dergleichen. Es genügt somit ein einziges Ladegerät für verschiedene Typen von Geräten.

Prinzipiell kann das Haushaltsgerät ein beliebiges Haushaltsgerät sein, also ein Haushaltsgroßgerät oder ein Haushaltskleingerät. Im Hinblick auf die Integration des Induktionsladegeräts erweist es sich jedoch als vorteilhaft, wenn das Haushaltsgerät ein Haushaltsgroßgerät ist. In einer Ausführungsform ist das Haushaltsgerät ein Gerät zur Pflege von Wäschestücken, also eine Waschmaschine, ein Wäschetrockner oder ein Waschtrockner. Die Funktionalität eines solchen Haushaltsgeräts wird also dahingehend erweitert, dass neben der Pflege von Wäschestücken auch elektronische, batteriebetriebene Geräte mithilfe eines solchen Haushaltsgeräts aufgeladen werden können.

In einer alternativen Ausführungsform ist das Haushaltsgerät ein Gerät zur Zubereitung von Lebensmitteln, nämlich insbesondere ein Induktionskochfeld. Diese Ausführungsform hat einen besonderen Vorteil: Es können bereits vorhandene Bauteile des Induktionskochfelds verwendet werden. Jedoch ist dies nicht zwingend erforderlich. Insgesamt sind diesbezüglich zwei alternative Ausführungsformen vorgesehen:

Das Induktionskochfeld kann zumindest eine Induktionsspule beinhalten, welche zur Abgabe von elektronmagnetischer Strahlung zum Erhitzen eines Zubereitungsgefäßes dient. Die Induktionsspule des Induktionsladegeräts kann eine von der Induktionsspule zum Erhitzen des Zubereitungsgefäßes verschiedene bzw. separate Induktionsspule sein. Erstere kann kleiner als letztere sein. Diese Ausführungsform erweist sich insbesondere dann als besonders vorteilhaft, wenn das Induktionskochfeld ausschließlich relativ große Induktionsspulen zum Erhitzen des Zubereitungsgefäßes beinhaltet, beispielsweise vier große Induktionsspulen, nämlich für jede Kochzone jeweils eine einzige Induktionsspule. Die Induktionsspule des Induktionsladegeräts kann dann eine kleinere Spule sein, mittels welcher ein Energiespeicher eines elektronischen Geräts mit elektrischer Energie aufgeladen werden kann. Dies hat den Vorteil, dass auch kleinere elektronische Geräte mit elektrischer Energie aufgeladen werden können, was alleine mit den relativ großen Induktionsspulen zum Erhitzen des Zubereitungsgefäßes nicht möglich ist.

Alternativ ist vorgesehen, dass die Induktionsspule des Induktionsladegeräts auch zur Abgabe von elektromagnetischer Strahlung zum Erhitzen eines Zubereitungsgefäßes dient. Mit anderen Worten kann das Induktionskochfeld eine Induktionsspule zum Erhitzen eines Zubereitungsgefäßes aufweisen, welche gleichzeitig auch die Induktionsspule des Induktionsladegeräts ist. Diese Induktionsspule ist also bei dieser Ausführungsform eine für die Ladefunktionalität und die Kochfunktionalität gemeinsame Induktionsspule. Eine solche Vorgehensweise hat den Vorteil, dass bereits vorhandene Bauelemente des Induktionskochfelds auch für Ladevorgänge genutzt werden können. Das Haushaltsgerät kommt hier somit mit einer reduzierten Anzahl von Bauelementen aus bzw. es erübrigt sich der Einsatz einer zusätzlichen Induktionsspule für das Induktionsladegerät. Diese Ausführungsform erweist sich wiederum dann als besonders vorteilhaft, wenn das Induktionskochfeld eine Vielzahl von relativ kleinen Induktionsspulen aufweist, nämlich insbesondere mehr als zehn Induktionsspulen, bevorzugt mehr als zwanzig Induktionsspulen, welche zur Abgabe von elektromagnetischer Strahlung zum Erhitzen eines Zubereitungsgefäßes ausgebildet sind. Die Anzahl der kleinen Induktionsspulen kann hier sogar 48 betragen. Hier kann einer Kochzone eine Mehrzahl von Induktionsspulen zugeordnet sein bzw. diese Mehrzahl von Spulen kann zum Erhitzen eines einzigen Zubereitungsgefäßes gleichzeitig verwendet werden. Bei solchen Induktionskochfeldern sind die Induktionsspulen verhältnismäßig klein und können somit auch zum Aufladen von elektronischen Kleingeräten verwendet werden.

Also kann das Induktionskochfeld eine Vielzahl von Induktionsspulen, insbesondere mindestens zehn Induktionsspulen, aufweisen, welche jeweils zur Abgabe von elektromagnetischer Strahlung zum Erhitzen eines Zubereitungsbehälters dienen. Die Vielzahl von Induktionsspulen können eine Spulengruppe des Induktionsladegeräts bilden. Dies bedeutet, dass das Induktionsladegerät eine Vielzahl von Induktionsspulen aufweist, die gleichzeitig auch zum Erhitzen des Zubereitungsgefäßes dienen. Eine Steuereinrichtung des Induktionsladegeräts kann somit auch eine beliebige Kombination aus der Vielzahl von Induktionsspulen bestromen, um das elektronische Gerät aufzuladen. Diese Ausführungsform hat den Vorteil, dass ein elektronisches Gerät praktisch an beliebiger Position auf das Induktionskochfeld gelegt und aufgeladen werden kann.

Beinhaltet das Induktionsladegerät eine Vielzahl von Induktionsspulen, so kann die Steuereinrichtung auch eine Position des elektronischen Geräts auf einer Aufstellplatte des Haushaltsgeräts bestimmen. Dann kann die Steuereinrichtung aus der Vielzahl der Induktionsspulen zumindest eine Induktionsspule zum Aufladen des elektronischen Geräts auswählen, nämlich insbesondere diejenige Induktionsspule, welche unterhalb der Aufstellplatte an der Position des elektronischen Geräts liegt. Vorzugsweise wird ausschließlich die zumindest eine ausgewählte Induktionsspule bestromt, während andere Induktionsspulen nicht bestromt werden bzw. zu diesem Zeitpunkt nicht zum Aufladen des elektronischen Geräts verwendet werden. Diese Ausführungsform hat den Vorteil, dass insgesamt elektrische Energie gespart werden kann; die Steuereinrichtung kann nämlich die Position des elektronischen Geräts auf der Aufstellplatte bestimmen und nur diejenige Induktionsspule bestromen, die sich an derselben Position unterhalb des elektronischen Geräts befindet. Auch hier kann die Bedienperson das elektronische Gerät quasi an beliebiger Position auf die Aufstellplatte legen. Eine solche Funktionalität kann insbesondere -jedoch nicht ausschließlich - bei dem genannten Qi-Standard sinnvoll sein; dieser Standard unterstützt nämlich diese Funktionalität.

Erfindungsgemäß wird darüber hinaus ein Verfahren zum Betreiben eines Haushaltsgeräts bereitgestellt. Mittels eines in das Haushaltsgerät integrierten Induktionsladegeräts wird ein interner elektrischer Energiespeicher eines elektronischen Geräts mit elektrischer Energie aufgeladen, nämlich durch eine direkte Übertragung von Energie von einer Induktionsspule des Induktionsladegeräts an das elektronische Gerät.

Die mit Bezug auf das erfindungsgemäße Haushaltsgerät vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Haushaltsgerät gemäß einer ersten Ausführungsform der Erfindung;
- Fig. 2: in schematischer Darstellung ein Haushaltsgerät gemäß einer zweiten Ausführungsform der Erfindung; und
- Fig. 3: in schematischer Darstellung ein Haushaltsgerät gemäß einer dritten Ausführungsform der Erfindung.

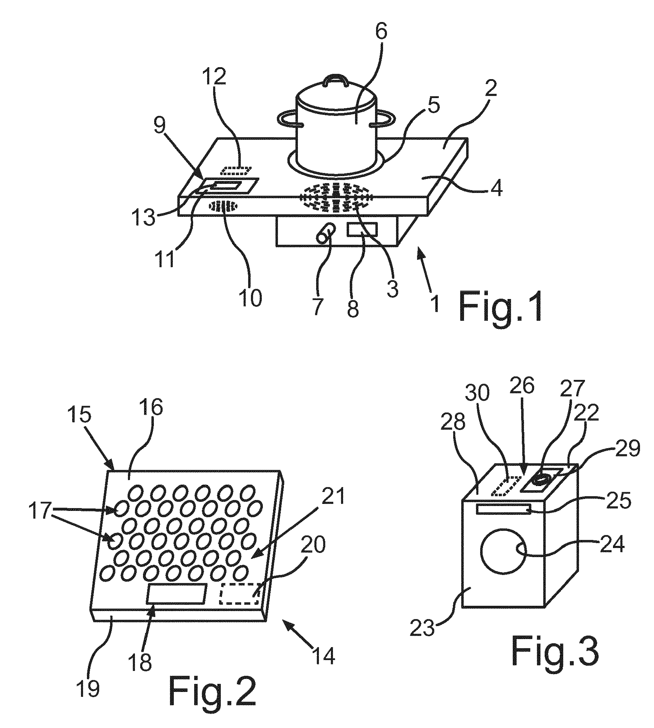

In Fig. 1 ist ein Haushaltsgerät 1 gemäß einer Ausführungsform der Erfindung dargestellt. Das Haushaltsgerät 1 ist ein Induktionskochfeld. Es weist eine Kochfeldplatte bzw. Aufstellplatte 2 auf, in welche eine Induktionsspule 3 integriert ist. Die Aufstellplatte 2 kann aus einem Glas oder Glaskeramikmaterial ausgebildet sein. Auf einer Oberseite 4 der Aufstellplatte 2 befindet sich eine Kochzone 5, auf welcher ein Zubereitungsgefäß 6 zum Zubereiten von Lebensmitteln - etwa ein Topf - aufgestellt ist. Die Induktionsspule 3 erstreckt sich parallel zur Oberseite 4 bzw. zur Aufstellplatte 2 und liegt unmittelbar unterhalb der Kochzone 5. Wird die Induktionsspule 3 mit einer Wechselspannung beaufschlagt, so erzeugt sie ein magnetisches Feld, welches in dem Zubereitungsgefäß 6 Wirbelströme induziert und somit Wärme erzeugt. Zur Einstellung der Heizleistung beinhaltet das Induktionskochfeld 1 eine Bedieneinrichtung 7, welche beispielsweise Drehelemente und/oder Druckelemente und/oder ein berührungsempfindliches Eingabefeld aufweisen kann. Das Induktionskochfeld 1 weist außerdem eine Anzeigeeinrichtung 8 auf. Diese kann zum Beispiel ein LCD-Display sein.

Also ist die Induktionsspule 3 relativ groß, nämlich etwa so groß wie die Kochzone 5 bzw. ein Durchmesser des Zubereitungsgefäßes 6. Ihr Durchmesser kann in einem Wertebereich zwischen 15 cm und 30 cm liegen. Sind mehrere Kochzonen 5 bei dem Induktionskochfeld 1 vorgesehen, so ist in diesem Falle jeder Kochzone 5 nur eine Induktionsspule 3 zugeordnet.

In das Induktionskochfeld 1, nämlich in die Aufstellplatte 2, ist außerdem ein Induktionsladegerät 9 integriert, welches zum Aufladen von elektronischen Geräten mit elektrischer Energie dient. Das Induktionsladegerät 9 beinhaltet ebenfalls eine Induktionsspule 10, welche sich ebenfalls parallel zur Oberseite 4 bzw. zur Aufstellplatte 2 erstreckt. Die Induktionsspule 10 des Induktionsladegeräts 9 liegt dabei direkt unterhalb einer auf der Oberseite 4 ausgebildeten Ladezone bzw. Ladefläche 11. Die Induktionsspule 10 ist hier deutlich kleiner bzw. weist einen geringeren Durchmesser auf als die Induktionsspule 3 zum Erhitzen des Zubereitungsgefäßes 6. Der Durchmesser dieser Induktionsspule 10 kann zum Beispiel in einem Wertebereich von 2 cm bis 10 cm liegen; er kann beispielsweise 4 cm betragen.

Das Induktionsladegerät 9 beinhaltet außerdem eine Steuereinrichtung 12, welche zum Steuern eines Stromflusses durch die Induktionsspule 10 ausgelegt ist. Dies kann beispielsweise mittels eines Wechselrichters erfolgen. Die Steuereinrichtung 12 kann einen Mikrocontroller beinhalten.

Das separat zur großen Induktionsspule 3 ausgebildete Induktionsladegerät 9 dient zum Aufladen von elektronischen Geräten mit elektrischer Energie, und genauer gesagt zum Aufladen von Energiespeichern elektronischer Geräte mit elektrischer Energie. Das Induktionsladegerät 9 kann dabei gemäß dem Qi-Standard aufgebaut sein bzw. zum Betrieb nach diesem Standard ausgebildet sein. Wird ein elektronisches Gerät 13 - etwa ein Mobiltelefon, eine Digitalkamera, ein Notebook oder ein PDA - auf die Ladezone 11 gelegt, so kann dieses elektronische Kleingerät 13 - nämlich seine Batterie bzw. sein Akku - aufgeladen werden. Dies erfolgt vollständig automatisch; der Benutzer braucht hier überhaupt nichts mehr zu tun. Der Ladevorgang erfolgt aufgrund einer Wechselwirkung zwischen der Induktionsspule 10 und einer weiteren Sekundärspule (in den Figuren nicht dargestellt), welche in dem elektronischen Gerät 13 angeordnet ist.

Die Ladezone 11 ist bevorzugt aus demselben Material wie der Rest der Aufstellplatte 2 ausgebildet; die Ladezone 11 kann beispielsweise ein Bereich der Oberseite 4 sein, welcher von dem Rest der Oberseite 4 zum Beispiel durch Markierungen abgegrenzt ist.

In Fig. 2 ist ein Haushaltsgerät 14 gemäß einer zweiten Ausführungsform der Erfindung dargestellt. Das Haushaltsgerät 14 ist hier ebenfalls ein Induktionskochfeld und beinhaltet auch eine Aufstellplatte 15 bzw. eine Kochfeldplatte. Auch diese kann aus einem Glas oder Glaskeramikmaterial sein. Auf einer Oberseite 16 der Aufstellplatte 15 sind Kochzonen ausgebildet, auf denen Zubereitungsgefäße 6 (siehe Fig. 1) bzw. Zubereitungsbehälter zum Zubereiten von Lebensmitteln aufstellbar sind, etwa Töpfe, Pfannen und dergleichen. Das Induktionskochfeld 14 gemäß Fig. 2 umfasst dazu eine Mehrzahl von kleineren Induktionsspulen 17, die im Ausführungsbeispiel matrixförmig angeordnet sind. Beispielsweise kann die Anzahl der Induktionsspulen 17 achtundvierzig betragen. Die Anzahl der Induktionsspulen 17 kann diesbezüglich jedoch auch nach oben oder nach unten abweichen. Vorzugsweise ist die Anzahl der Induktionsspulen 17 jedoch größer als dreißig. Darüber hinaus umfasst das Induktionskochfeld 14 eine Bedieneinrichtung 18, welche beispielsweise als berührungssensitive Bedieneinrichtung ausgebildet ist. Sie ist im Ausführungsbeispiel benachbart zu einer Frontseite 19 der Aufstellplatte 15 angeordnet. Die Induktionsspulen 17 sind unterhalb der Oberseite 16 angeordnet bzw. in die Aufstellplatte 15 integriert. Sie erstrecken sich ebenfalls parallel zur Oberseite 16 und sind somit planare Induktionsspulen. Eine Steuereinrichtung 20 steuert den jeweiligen Stromfluss durch die Induktionsspulen 17 und somit auch die Heizleistung.

Auf die Aufstellplatte 15 können mehrere Zubereitungsbehälter aufgestellt werden; es können nämlich mehrere Kochzonen auf der Oberseite 16 ausgebildet sein. Jeder Kochzone können also eine Vielzahl von Induktionsspulen 17 zugeordnet sein. Die Induktionsspulen 17 sind nämlich verhältnismäßig klein, nämlich kleiner als die Induktionsspule 3 des Induktionskochfelds 1 gemäß Fig. 1. Der Durchmesser einer Induktionsspule 17 kann beispielsweise zwischen 3 cm und 10 cm liegen.

Auch das Induktionskochfeld 14 gemäß Fig. 2 beinhaltet ein integriertes Induktionsladegerät 21, welches - anders als beim Induktionskochfeld 1 gemäß Fig. 1 - kein separates Induktionsladegerät ist, sondern die vorhandenen Komponenten des Induktionskochfelds 14 aufweist. Und zwar ist das Induktionsladegerät 21 durch alle Induktionsspulen 17, wie auch durch die Steuereinrichtung 20 gebildet. Es werden also die bereits vorhandenen Komponenten des Induktionskochfelds 14 verwendet, und es können Bauteile und Kosten gespart werden.

Um ein elektronisches Gerät mit elektrischer Energie aufzuladen, kann dieses elektronische Gerät auf die Oberseite 16 der Aufstellplatte 15 gelegt werden. Auch das Induktionsladegerät 21 kann nach dem Qi-Standard ausgelegt sein, sodass verschiedenste Typen von elektronischen Geräten aufgeladen werden können. Wird ein elektronisches Gerät auf die Oberseite 16 gelegt, so bestimmt die Steuereinrichtung 20 anhand der magnetischen Induktion die Position des elektronischen Geräts auf der Oberseite 16. Die Steuereinrichtung 20 kann nämlich eine an den jeweiligen Induktionsspulen 17 abfallende elektrische Spannung und/oder einen durch die jeweilige Induktionsspule 17 fließenden Strom messen. Die Steuereinrichtung 20 bestromt dann nur diejenige Induktionsspule 17 zum Aufladen des elektronischen Geräts, welche sich unmittelbar unterhalb des elektronischen Geräts befindet bzw. an derselben Position wie das elektronische Gerät liegt. Diese Funktionalität kann auch bei den Ausführungsbeispielen gemäß den Figuren 1 und 3 gegeben sein, nämlich dann, wenn zusätzliche Induktionsspulen für das jeweilige Induktionsladegerät eingesetzt werden.

Beim Induktionskochfeld 14 gemäß Fig. 2 erübrigt sich also der Einsatz einer zusätzlichen Induktionsspule zum Aufladen von elektronischen Geräten. Dies aus dem Grund, dass die vorhandenen Induktionsspulen 17 relativ klein und somit geeignet für einen Ladevorgang sind. Die vorhandenen Induktionsspulen 17 sind also sowohl zum Erhitzen eines Zubereitungsbehälters als auch zum Aufladen eines elektronischen Geräts ausgebildet.

In Fig. 3 ist ein Haushaltsgerät 22 gemäß einer dritten Ausführungsform der Erfindung dargestellt. Es ist ein Gerät zur Pflege von Wäschestücken und kann eine Waschmaschine, ein Waschtrockner oder ein Wäschetrockner sein. Das Haushaltsgerät 22 weist bekanntlich eine in einer Frontwand 23 ausgebildete und mit einer nicht dargestellten Tür verschließbare Öffnung 24 auf, durch welche Wäschestücke in eine Wäschetrommel eingebracht werden können. Das Haushaltsgerät 22 weist außerdem bekanntlich eine Bedieneinrichtung 25 auf, mittels welcher verschiedenste Betriebsprogramme ausgewählt werden können.

In das Haushaltsgerät 22 ist ein Induktionsladegerät 26 integriert, welches zum Aufladen von elektronischen Geräten mit elektrischer Energie dient, nämlich wie oben bereits beschrieben. Das Induktionsladegerät umfasst eine Induktionsspule 27, welche in ihren Abmessungen den Induktionsspulen 10 (Fig. 1) und 17 (Fig. 2) gleich aufgebaut werden kann. Die Induktionsspule 27 befindet sich unterhalb einer Oberseite 28 des Haushaltsgeräts 22, nämlich direkt unterhalb einer an der Oberseite 28 ausgebildeten bzw. gekennzeichneten Ladezone 29. Die Oberseite 28 bildet hier also eine Aufstellplatte für elektronische Geräte. Zur Steuerung des Stromflusses durch die Induktionsspulen 27 beinhaltet das Induktionsladegerät 26 eine Steuereinrichtung 30. Diese Steuereinrichtung 30 kann auch eine gemeinsame Steuereinrichtung sein, mittels welcher die Betriebsprogramme des Haushaltsgeräts 22 gesteuert werden. Sie kann aber auch eine separate Steuereinrichtung sein, welche ausschließlich die Ladevorgänge der elektronischen Geräte steuert.

Wird nun ein elektronisches Gerät - etwa ein Handy oder dergleichen - auf die Ladezone 29 gelegt, so startet die Steuereinrichtung 30 den Ladevorgang. Auch hier braucht die Bedienperson überhaupt nichts mehr zu tun, denn der Ladevorgang wird automatisch eingeleitet, nämlich wie bei den Haushaltsgeräten 1, 14 gemäß den Fig. 1 und 2.

### Bezugszeichenliste

- 1: Haushaltsgerät
- 2: Kochfeldplatte
- 3: Induktionsspule
- 4: Oberseite
- 5: Kochzone
- 6: Zubereitungsgefäß
- 7: Bedieneinrichtung
- 8: Anzeigeeinrichtung
- 9: Induktionsladegerät
- 10: Induktionsspule
- 11: Ladezone
- 12: Steuereinrichtung
- 13: elektronisches Gerät
- 14: Haushaltsgerät
- 15: Aufstellplatte
- 16: Oberseite
- 17: Induktionsspule
- 18: Bedieneinrichtung
- 19: Frontseite
- 20: Steuereinrichtung
- 21: Induktionsladegerät
- 22: Hauhaltsgerät
- 23: Frontwand
- 24: Öffnung
- 25: Bedieneinrichtung
- 26: Induktionsladegerät
- 27: Induktionsspule
- 28: Oberseite
- 29: Ladezone
- 30: Steuereinrichtung

## Patentansprüche

1. Haushaltsgerät (1, 14, 22), **gekennzeichnet durch** ein in das Haushaltsgerät (1, 14, 22) integriertes Induktionsladegerät (9, 21, 26) mit einer Induktionsspule (10, 17, 27), welches dazu ausgebildet ist, **durch** eine direkte Übertragung von Energie von der Induktionsspule (10, 17, 27) an ein in einer Umgebung des Haushaltsgeräts (1, 14, 22) befindliches elektronisches Gerät (13) einen internen elektrischen Energiespeicher des elektronischen Gerätes (13) mit elektrischer Energie aufzuladen.

2. Haushaltsgerät (1, 14, 22) nach Anspruch 1, **dadurch gekennzeichnet, dass** das Induktionsladegerät (9, 21, 26) zum Aufladen eines tragbaren Kommunikationsgerätes als elektronischen Gerätes (13) ausgebildet ist.

3. Haushaltsgerät (1, 14, 22) nach Anspruch 1 oder 2, **dadurch gekennzeichnet, dass** das Induktionsladegerät (9, 21, 26) zum Betrieb nach dem Qi-Standard ausgebildet ist.

4. Haushaltsgerät (1, 14, 22) nach einem der vorhergehenden Ansprüche, **dadurch gekennzeichnet, dass** das Haushaltsgerät (1, 14, 22) ein Gerät zur Pflege von Wäschestücken ist.

5. Haushaltsgerät (1, 14, 22) nach einem der Ansprüche 1 bis 3, **dadurch gekennzeichnet, dass** das Haushaltsgerät (1, 14, 22) ein Gerät zur Zubereitung von Lebensmitteln, insbesondere ein Induktionskochfeld, ist.

6. Haushaltsgerät (1, 14, 22) nach Anspruch 5, **dadurch gekennzeichnet, dass** das Induktionskochfeld (1, 14) zumindest eine Induktionsspule (3) zur Abgabe von elektromagnetischer Strahlung zum Erhitzen eines Zubereitungsgefäßes (6) aufweist, und dass die Induktionsspule (10, 17, 27) des Induktionsladegeräts (9, 21, 26) eine von der Induktionsspule (3) zum Erhitzen des Zubereitungsgefäßes (6) verschiedene Induktionsspule (10, 17, 27) ist.

7. Haushaltsgerät (1, 14, 22) nach Anspruch 5, **dadurch gekennzeichnet, dass** die Induktionsspule (10, 17, 27) des Induktionsladegeräts (9, 21, 26) auch zur Abgabe von elektromagnetischer Strahlung zum Erhitzen eines Zubereitungsgefäßes (6) ausgebildet ist.

8. Haushaltsgerät (1, 14, 22) nach Anspruch 7, **dadurch gekennzeichnet, dass** das Induktionskochfeld (1, 14) eine Vielzahl von Induktionsspulen (17), insbesondere mindestens zehn Induktionsspulen (17), jeweils zur Abgabe von elektromagnetischer Strahlung zum Erhitzen eines Zubereitungsgefäßes umfasst, und dass die Vielzahl von Induktionsspulen (17) auch eine Spulengruppe des Induktionsladegeräts (9, 21, 26) bilden.

9. Haushaltsgerät (1, 14, 22) nach einem der vorhergehenden Ansprüche, **dadurch gekennzeichnet, dass** das Induktionsladegerät (9, 21, 26) eine Vielzahl von Induktionsspulen (10, 17, 27) und eine Steuereinrichtung (12, 20, 30) aufweist, welche dazu ausgelegt ist, eine Position des elektronischen Gerätes (13) auf einer Aufstellplatte (2, 15) des Haushaltsgeräts (1, 14, 22) zu bestimmen und aus der Vielzahl der Induktionsspulen (10, 17, 27) zumindest eine Induktionsspule (10, 17, 27) zum Aufladen des elektronischen Gerätes (13) auszuwählen, die an der Position des elektronischen Gerätes (13) liegt.

10. Verfahren zum Betreiben eines Haushaltsgeräts (1, 14, 22), **dadurch gekennzeichnet, dass** mittels eines in das Haushaltsgerät (1, 14, 22) integrierten Induktionsladegeräts (9, 21, 26) durch eine direkte Übertragung von Energie von einer Induktionsspule (10, 17, 27) des Induktionsladegeräts (9, 21, 26) an ein in einer Umgebung des Haushaltsgeräts (1, 14, 22) befindliches elektronisches Gerät (13) ein interner elektrischer Energiespeicher des elektronischen Gerätes (13) mit elektrischer Energie aufgeladen wird.
